# EUROPEAN PATENT APPLICATION

(11) **EP 4 779 066 A1**
(43) Date of publication of application: **22.07.2026**
(21) Application number: 25151999.7
(22) Date of filing: 15.01.2025
(51) Int. Cl.: D01C 1/02, C08B 37/00

(54) **METHOD OF PRODUCING NATURAL PLANT MICROFIBRES AND TECHNOLOGICAL LINE FOR PRODUCING NATURAL PLANT MICROFIBRES**

(71) Applicant: Instytut Wlokien Naturalnych i Roslin Zielarskich, 60-630 Poznan (PL)
(72) Inventor: Zimniewska, Malgorzata, 62-081 Przezmierowo (PL); Rózanska, Wanda, 60-640 Poznan (PL); Mankowski, Jerzy, 61-308 Poznan (PL); Gieparda, Weronika, 62-020 Zalasewo (PL); Rojewski, Szymon, 62-200 Gniezno (PL)
(74) Representative: Twardowska-Czerwinska, Aleksandra

(57) **Abstract**

The subject of the invention is a method of producing natural plant microfibers and a technological line for producing natural microfibers. More specifically, the invention concerns a method of producing natural plant microfibers, with given properties defined by requirements resulting from the final application, using a technological line designed and built specifically for this purpose. The line is composed of three main modules that cooperate with each other: 1 - degumming - modifying, 2 - drying and 3 - fragmentation.

## Description

The subject of the invention is a method of producing natural plant microfibers and a technological line for producing natural microfibers. More specifically, the invention concerns a method of producing natural plant microfibers, with given properties defined by requirements resulting from the final application, using a technological line designed and built specifically for this purpose. The line is composed of three main modules cooperating with each other: 1- degumming - modifying, 2 - drying and 3 - fragmentation.

The development of plant microfibers and their industrial usage is necessary due to the need to limit the production of petroleum-based fibers, which, as a non-biodegradable raw material, after their lifetime become waste that is difficult to dispose and are a source of microplastics. Synthetic microfibers, popularly called microplastics, are harmful to the natural environment, pose a threat to ecosystems, organisms living in salt and fresh water, agricultural crops, soil and air.

Plant fibers are renewable and biodegradable raw materials. Fibers obtained from different parts of plants such as stem, leaves and fruits are characterized by specific dimensions depending on the type of fiber, as presented in Table 1.

**Table 1. Characteristics of the most commonly used plant fibers.**

| Fiber | Technical fiber length [m] | Elementary fiber length [mm] | Elementary fiber diameter [µm] | Linear density of elementary fiber [tex] g/km |
|---|---|---|---|---|
| Cotton | - | 10-22 short-fiber | 10 to 30 µm | 0.11-0.23 |
| | | 22-33 medium grain | | |
| | | 33-55 long-fiber | | |
| Flax | 0.2-1.4 | 13-40 | 17-20 | 0.289 |
| Hemp | 1.0-3.0 | 15-25 | 15-30 | 0.333 |
| Ramie | 1-1.8 | 120-150 | 40-60 | 0.500 |
| Kenaf | 0.9 - 1.8 | 1.5 - 11 | 14 - 33 | 1,9 - 2,2 |
| Nettle | 0,02-0,08 | 5,5 | 20 - 80 | 0,5 |
| Jute | 1,5-3,7 | 2-3 | 14-20 | 0,244 |
| Sisal | 0,6-1,5 | 3 | 11-20 | 0,300 |
| Cocos | 0,15-0,35 | 0,7 | 16-20 | |

With the exception of cotton, plant fibers contain mainly cellulose in their chemical composition, as well as lignin, hemicellulose, pectins, waxes and fats. The high cellulose content in fibers gives them hydrophilic properties, which can limit their wide applications, including composite applications.

In order to give plant fibers the properties of high adhesion to polymers and biopolymers in the composite material forming process, fiber modification processes developed for a specific application should be used.

Patent description CN110656529B1 (published 2020-01-07) describes a microfiber, a method of its preparation and application, and a method of producing a membrane for electrical devices. Microfibers are obtained by mechanical processing of hemp pulp fiber, polyphenylene terephthalamide fiber or regenerated cellulose fiber; the diameter of the microfiber is from 0.1 to 0.5 m. The invention also provides a method of producing a membrane for electrical equipment, which comprises the following steps: mixing the microfibers, the papermaking fibers, and water to obtain a mixed slurry; and carrying out paper treatment of the mixed pulp using a paper machine to obtain a membrane for electrical equipment. The microfibers provided according to the invention have a relatively small diameter and can be used to prepare a membrane for electrical equipment, and the prepared membrane for electrical equipment is characterized by a small pore diameter and high porosity.

Patent description EP2809413B1 (published 2014-12-10) discloses processes for producing of microfibers. The process for producing a microfiber product stream comprises: (A) contacting cut multicomponent fibers having a length of less than 25 millimeters with a treated aqueous stream in a fiber slurry zone to produce a cut multicomponent fiber slurry; (B) contacting the cut multicomponent fiber slurry with a heated aqueous stream in a mix zone to produce a heated multicomponent fiber slurry; (C) sending the heated multicomponent fiber slurry to a fiber opening zone to remove a portion of the water- dispersible sulfopolyester to produce an opened microfiber slurry; and (D) sending the opened microfiber slurry to a primary solid-liquid separation zone to produce a microfiber product stream and a first mother solution stream.

Patent application WO2023235269A1 (published 2023-12-07) discloses a method of producing nanofibers, microfibers, and lignin from lignocellulosic biomass. Various techniques for producing nanocellulose are described. An exemplary method includes generating a first material by performing an alkaline peroxide pulping on a heterogeneous biomass; generating a second material by removing at least a portion of a dissolved lignin fraction from the first material; and generating a third material by performing mechanical fibrillation on the second material. A fourth material is generated by performing an oxidation pretreatment on the third material. A fifth material is generated by mechanical fibrillation of the fourth material. The fifth material comprises lignocellulosic microfibrils (LCMF) having a dimension in a range of about 10 to about 1000 nanometers (nm) and/or lignocellulosic nanofibrils (LCNF) having a dimension in range of about 1 to about 10 nm.

Despite the existing methods based on synthetic microfibers, there is a need to develop a method of producing plant microfibers that could be used as biodegradable filling of composite products manufactured on the basis of polymer matrices. There is a constant need to give plant microfibers high adhesion to many types of polymer and biopolymer matrices in the composite materials forming process, thanks to the applied modifications.

The aim of the invention is to develop a method for obtaining plant microfibers, using a specialized technological line designed for this purpose, in which the processes of fiber degumming, modification and fragmentation are combined, creating a process synergy that allows for achieving specific fiber properties, i.e. fiber micro-dimensions and increased adhesion to polymers and biopolymers, for use as composite fillings.

Unexpectedly, it turned out that the proprietary method developed by the inventors provides a technological line for the production of plant microfibers previously unavailable in the prior art.

The realization of such a defined goal and the solution of the problems described in the prior art related to obtaining plant microfibers with specific parameters have been achieved in the present invention.

The subject of the invention is a method of producing natural plant microfibers extracted from the fibrous plant biomass, characterized in that the plant fiber cleaned of impurities is subjected to a degumming process in order to loosen the parenchyma and meristem tissues connecting the elementary fibers in bundles, then a process of removing the excess of absorbed degumming solution and degummed substances is carried out, after which the fiber is rinsed and wrung, wherein the degumming and rinsing process is carried out at a temperature of 7 to 60°C for 15 minutes to 24 hours, wherein when the plant fiber is subjected to degumming and rinsing, water mixing is used, then the plant fiber after the degumming process is subjected to a chemical modification process with the use of silane from 15 minutes to 24 hours, the fiber is wrung, and then the fiber is dried at a temperature of 60-150°C to a moisture content of 2-15%, the dried fiber is ground.

Preferably, the degumming of the fiber is carried out using chemical/biological agents dissolved in water, selected from ammonium citrate, ammonium oxalate, sodium carbonate, acids such as oxalic acid, acetic acid and sulfuric acid, oxidizing agents such as sodium chlorite, hydrogen peroxide and enzymes from the group of: hemicellulases, pectinases and phenol oxidases and other chemical substances.

Preferably, the fibers of bast plants are subjected to the degumming and rinsing processes. Preferably, the modification of the degummed fiber is carried out using silanes comprising various amounts of alkoxy and amine groups and silanes containing double bonds or alkyl chains in their structures, wherein silanes are selected from: tetraethoxysilane, 3-aminopropyltrimethoxysilane, 3-aminopropyltriethoxysilane, (N-(2-aminoethyl)3-aminopropyltriethoxysilane, N-(2-aminoethyl)-3-aminopropyltrimethoxysilane, 3-[2-(2-aminoethylamino)ethylamino]propyltrimethoxysilane, vinyltrimethoxysilane, 3-methacryloxypropyltrimethoxysilane, n-octyltriethoxysilane, trimethoxy( octa-decyl)silane. Preferably, the silane is used in an amount of 1-15% in the water/alcohol solution with a weight ratio of 1:0.02 - 1:2, wherein the process is carried out in an amount of water/alcohol solution 5-10 times greater than the amount of fiber.

Preferably, the fiber polarity change results in compatibility with the polymer matrix in the process of composites and biocomposites manufacturing, wherein the degree of silane solution application onto the fiber is 100-180%.

Preferably, the fiber is subjected to preliminary grinding in a guillotine, and then the fiber is ground 2 to 5 times in a mill.

Another subject of the invention is a technological line for the production of natural plant microfibers extracted from the fibrous plant biomass, characterized in that it comprises a) a degumming and modifying module R1-PW-R2-PW, b) a drying module SS and c) a fragmentation module F, wherein in module a) a fiber constituting the input raw material feeding the line is cleaned, after which the plant fiber cleaned of impurities is subjected to a degumming process in order to loosen the parenchyma and meristem tissues connecting the elementary fibers in bundles, then a process of removing the excess of absorbed degumming solution and degummed substances is carried out, after which the fiber is rinsed and wrung, then the plant fiber after the degumming process is subjected to a chemical modification process with the use of silane, the fiber is wrung, and then in module b) the fiber is dried at a temperature of 60-150° C until the moisture content in the fiber is in the range of 2 to 15%, then the dried fiber is ground in module c).

Preferably, the degumming of the fiber in the (a) degumming and modifying module R1-PW-R2-PW is carried out using chemical/biological agents dissolved in water, selected from ammonium citrate, ammonium oxalate, sodium carbonate, acids such as: oxalic acid, acetic acid and sulfuric acid, oxidizing agents such as: sodium chlorite, hydrogen peroxide and enzymes from the group of: hemicellulases, pectinases and phenol oxidases and other chemical substances, wherein the degumming and rinsing process is carried out at a temperature of 7 to 60°C for 15 minutes to 24 hours, wherein when the plant fiber is subjected to degumming and rinsing, water mixing is used.

Preferably, in the (a) degumming and modifying module R1-PW-R2-PW the modification of the degummed fiber is carried out using silanes comprising various amounts of alkoxy and amine groups and silanes comprising double bonds or alkyl chains in their structures, wherein silanes are selected from: tetraethoxysilane, 3-aminopropyltrimethoxysilane, 3-aminopropyltriethoxysilane, (N-(2-aminoethyl)3-aminopropyltriethoxysilane, N-(2-aminoethyl)-3-aminopropyltrimethoxysilane, 3-[2-(2-aminoethylamino)ethylamino]propyltrimethoxysilane, vinyltrimethoxysilane, 3-methacryloxypropyltrimethoxysilane, n- octyltriethoxysilane, trimethoxy(octadecyl)silane.

Preferably, the fiber from bast plants is subjected to the degumming and rinsing processes.

Preferably, in the (a) degumming and modifying module R1-PW-R2-PW the process of chemical modification with the use of silane is carried out for a period of 15 minutes to 24 hours, the silane is used in an amount of 1-15% in a water/alcohol solution with a weight ratio of 1:0.02 - 1:2, wherein the chemical modification process with silane is carried out in an amount of water/alcohol solution 5 to 10 times greater than the amount of fiber. Preferably, the fiber polarity change results in compatibility with the polymer matrix in the process of composites and biocomposites manufacturing, wherein the degree of silane solution application onto the fiber is 100-180%.

In order to illustrate the invention, it is shown in the drawing, where:
**Figure 1** shows a diagram of the technological line for producing plant microfibers with given properties: degumming and modifying module: R1-plant fiber degumming reactor, R2 - fiber modifying reactor, PW - rinsing and wringing processes, S - drying module, F - fragmentation module.
**Figure 2** shows the raw material flow diagram in the plant microfiber production line.
**Figure 3** shows microscopic photographs of flax microfibers and hemp microfibers.

In order to better understand the invention, the solution is illustrated in the following embodiments. These examples are not intended to limit the invention, but only to enable a more detailed understanding of its possible implementations.

### Examples

### General description of the process

### Obtaining the input raw material for microfiber production

Plant fiber designed for the production of microfibers is extracted from the biomass of fibrous plants using one of the following methods: field retting, water retting, osmotic degumming, enzymatic retting, chemical retting, freezing, steam explosion method, mechanical extraction of fiber, e.g. decortication and others. Depending on the method of extraction of the fiber it must be cleaned of impurities and shives by crushing, scutching, carding and/or cottonization in order to provide the fibers with the lowest possible linear mass. The fiber prepared in this way is the input raw material for the production of plant microfibers using the developed technological line constituting the method that is the subject of the invention.

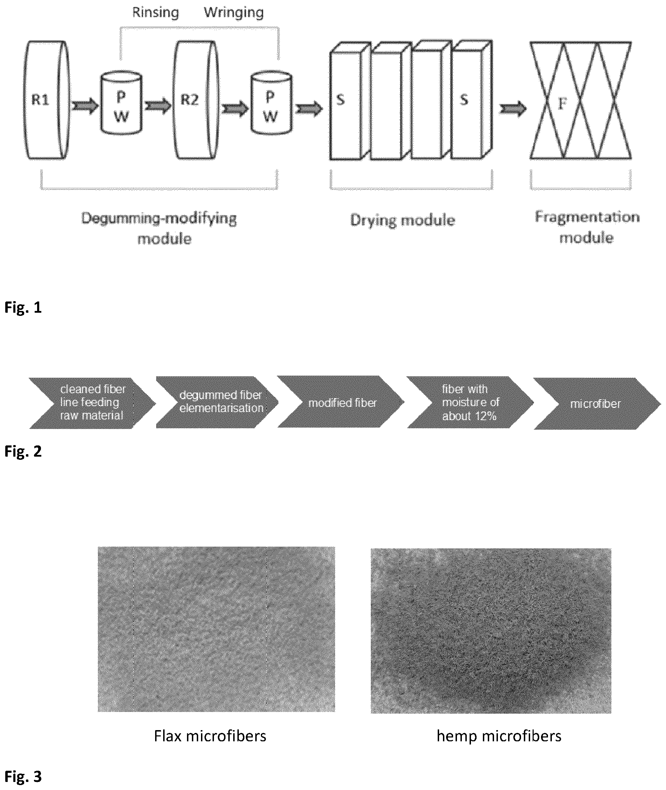

In the technological line prepared in this way (Fig. 1), a synchronized flow of raw material was provided, as shown schematically in Figure 2.

### Technological line

In the degumming-modifying Module (1), plant fibers free of all organic impurities are subjected to a degumming process in order to loosen the parenchyma and meristem tissues connecting elementary fibers in bundles. The degumming of fibers is carried out in an aqueous solution of ammonium citrate, ammonium oxalate, sodium carbonate, acids such as: oxalic acid, acetic acid and sulfuric acid, oxidizing agents such as: sodium chlorite, hydrogen peroxide and enzymes from the group of: hemicellulases, pectinases and phenolic oxidases and other chemical substances. The degumming process allows to achieve transverse dimension of the fiber in the range of 10 - 50 µm.

After leaving the R1 reactor, the fiber undergoes a process of removing the excess of absorbed degumming solution, because plant fibers are hydrophilic and have a high capacity to absorb liquids. Then, within module 1, the fiber undergoes a rinsing and wringing process to remove adhesive substances from the fiber surface. In the next stage, the fiber passes to the R2 reactor to carry out the modification process. The aim of the plant fiber modification process is to change the polarity of the fiber, which results in the desired adhesion of the fiber to the polymer matrix in the process of producing composites and biocomposites, which in turn improves the mechanical properties of the product. Modification of the degummed fiber is carried out using silanes containing various amounts of alkoxy and amine groups and silanes containing double bonds or alkyl chains in their structures, e.g. tetraethoxysilane

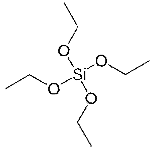

### 3-aminopropyltrimethoxysilane

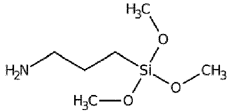

### 3-aminopropyltriethoxysilane

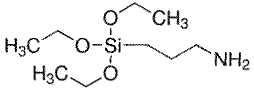

### (N-(2-aminoethyl)3-aminopropyltriethoxysilane

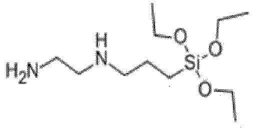

### N-(2-aminoethyl)-3-aminopropyltrimethoxysilane

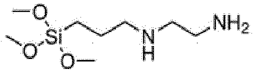

### 3-[2-(2-aminoethylamino) ethylamino]propyltrimethoxysilane

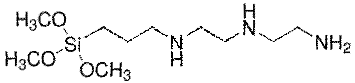

### vinyltrimethoxysilane

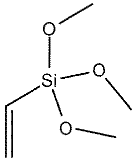

### 3-methacryloxypropyltrimethoxysilane

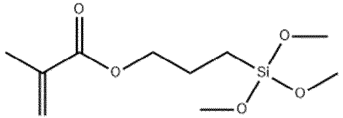

### n- octyltriethoxysilane

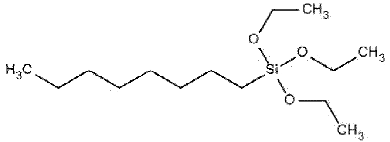

### trimethoxy(octadecyl)silane

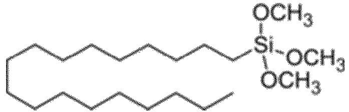

After leaving the R2 reactor, the fiber is subjected to a wringing process in order to obtain the appropriate degree of silane deposition.

After wet degumming and modification processes, the fiber is subjected to a drying process (Module 2) to obtain 12% fiber moisture content, which is required in mechanical fiber processing.

The dried fiber is transferred to the fragmentation Module (3) which realize the process in a three-stage fragmentation system with variable cutting length until an average fibre length of approx. 250 µm is obtained.

In the detailed embodiments, flax and hemp fibers are used, however, as indicated above, these examples are not intended to limit the invention and therefore, the inventors are aware that fibers from other bast plants selected from plants such as kenaf, jute, ramie, isora, nettle and others may be used.

### Example 1

The hemp fiber is subjected to a degumming process, where it is placed in a R1 reactor filled with the 5% ammonium citrate solution in water at the temperature of 30° C in an amount of solution eight times greater than the amount of fiber. After 2 hours of the degumming process, the water solution is removed and the fiber is wrung.

The degummed hemp fiber is subjected to a rinsing process, where it is placed in the R1 reactor filled with water at the temperature of 30° C in an amount of water five times greater than the amount of fiber. After 10 minutes of rinsing, the water is removed and the fiber is wrung again.

The degummed and rinsed hemp fiber is subjected to a modification process, where it is placed in an R2 reactor filled with the 1% solution of 3-methacryloxypropyltrimethoxysilane in water/ethanol mixture of 1:0.1 ratio in an amount of solution twelve times greater than the amount of fiber (initial mass of the fiber). After 1 hour of the modification process, the solution is removed and the fiber is wrung on a wringer until 150% of the liquid is applied to the fiber. Then the hemp fiber is dried in dryers at a temperature not exceeding 105°C until 8% of moisture content is obtained. The dried fiber is then subjected to grinding on a guillotine and mills to fractions of the desired size.

### Example 2

The flax fiber is subjected to a degumming process, where it is placed in a reactor R1 filled with a 1% ammonium oxalate solution in water at the temperature of 20° C in an amount of solution ten times greater than the amount of fiber. After 0.5 hours of the degumming process, the water solution is removed and the fiber is wrung.

The degummed hemp fiber is subjected to a rinsing process, where it is placed in the R1 reactor filled with water at the temperature of 20° C in an amount of water eight times greater than the amount of fiber. After 30 minutes of rinsing, the water is removed and the fiber is wrung again.

The degummed and rinsed hemp fiber is subjected to a modification process, where it is placed in a R2 reactor filled with 1% tetraethoxysilane solution in water/ethanol mixture of 1:0.05 ratio in an amount of solution ten times greater than the amount of fiber (initial fiber mass). After 4 hours of the modification process, the solution is removed and the fiber is wrung on a wringer until 110% of the liquid is applied to the fiber.

Then the hemp fiber is dried in dryers at a temperature not exceeding 130° C until 15% of moisture content is obtained. The dried fiber is then ground on a guillotine and in mills to fractions of the desired size.

### CHARACTERIZATION OF MODIFIED FLAX/HEMP MICROFIBERS

| **Category** | **Parameter** | **Flax** | **Hemp** | **Unit** |
|---|---|---|---|---|
| **General information** | **Chemical composition** | cellulose, hemicellulose, lignin, pectin, waxes and fats | | |
| | **Form** | Microfibers | | |
| | **Group of materials** | natural (fibers) | | |
| | **Basic material** | cellulose | | |
| | **Renewable material content** | 100 | 100 | % |
| | **Impurities content** | <0.2 | <0.5 | % |
| | **Natural material** | 100 | 100 | % |
| **Physical properties** | **Length, avg.** | 303.3 | 271.9 | µm |
| | **Diameter, avg.** | 12.7 | 13.34 | µm |
| | **Surface free energy, avg.** | 26 | 32.6 | mN/m |
| **Thermal properties** | **DTG peak, avg.** | 361 | 363 | °C |
| | **Temperature at 10% mass loss, avg.** | 287 | 291 | °C |
| | **Temperature at 60% weight loss, avg.** | 364 | 363 | °C |
| | **Residue at 700°C, avg.** | 12.5 | 13.0 | % |
| **Flammability** | **Heat release rate (MAX), avg.** | 155 | 155 | W/g |

The fiber is used as a biodegradable filling for composite products made on the basis of polymer matrices. Thanks to the applied modifications, compatibility with many types of matrices can be achieved. The obtained fiber is used, among others, for packaging materials, 3D printing filaments, or in the automotive industry.

## Claims

1. A method of producing natural plant microfibers extracted from the fibrous plant biomass, **characterized in that** the plant fiber cleaned of impurities is subjected to a degumming process in order to loosen the parenchyma and meristem tissues connecting the elementary fibers in bundles, then a process of removing the excess of absorbed degumming solution and degummed substances is carried out, after which the fiber is rinsed and wrung, wherein the degumming and rinsing process is carried out at a temperature of 7 to 60°C for 15 minutes to 24 hours, wherein when the plant fiber is subjected to degumming and rinsing, water mixing is used and then the plant fiber after the degumming process is subjected to a chemical modification process with the use of silane from 15 minutes to 24 hours, the fiber is wrung, then the fiber is dried at a temperature of 60-150° C until 2-15% of moisture content is obtained, the dried fiber is ground.

2. The method according to claim 1, **characterized in that** the fiber degumming is carried out using chemical/biological agents dissolved in water, selected from ammonium citrate, ammonium oxalate, sodium carbonate, acids such as oxalic acid, acetic acid and sulfuric acid, oxidizing agents such as sodium chlorite, hydrogen peroxide and enzymes from the group of: hemicellulases, pectinases and phenol oxidases and other chemical substances.

3. The method according to claim 1, **characterized in that** the fiber of bast plants is subjected to the degumming and rinsing processes.

4. The method according to claim 1, **characterized in that** the modification of the degummed fiber is carried out using silanes comprising various amounts of alkoxy and amine groups and silanes comprising double bonds or alkyl chains in their structures, wherein the silanes are selected from: tetraethoxysilane, 3-aminopropyltrimethoxysilane, 3-aminopropyltriethoxysilane, (N-(2-aminoethyl)3-aminopropyltriethoxysilane, N-(2-aminoethyl)-3-aminopropyltrimethoxysilane, 3-[2-(2-aminoethylamino)ethylamino]propyltrimethoxysilane, vinyltrimethoxysilane, 3-methacryloxypropyltrimethoxysilane, n-octyltriethoxysilane, trimethoxy(octadecyl)silane.

5. The method according to claim 1, **characterized in that** silane is used in an amount of 1-15% in a water/alcohol solution with a weight ratio of 1:0.02 - 1:2, wherein the process is carried out in an amount of water/alcohol solution 5-10 times greater than the amount of fiber.

6. The method according to claim 1, **characterized in that** the fiber polarity change results in compatibility with the polymer matrix in the process of composites and biocomposites manufacturing, wherein the degree of silane solution application onto the fiber is 100-180%.

7. The method according to claim 1, **characterized in that** the fiber is subjected to preliminary grinding with the use of guillotine, and then the fiber is subjected to 2 to 5-fold grinding in a mill.

8. A technological line for producing natural plant microfibers extracted from the fibrous plant biomass, **characterized in that** it comprises a) a degumming and modifying module R1-PW-R2-PW, b) a drying module SS and c) a fragmentation module F, wherein in module a) a fiber constituting the input raw material feeding the line is cleaned, after which the plant fiber cleaned of impurities is subjected to a degumming process in order to loosen the parenchyma and meristem tissues connecting the elementary fibers in bundles, then a process of removing the excess of absorbed degumming solution and degummed substances is carried out, after which the fiber is rinsed and wrung, then the plant fiber after the degumming process is subjected to a chemical modification process with the use of silane, the fiber is wrung, after which in module b) the fiber is dried at a temperature of 60-150°C until the moisture content in the fiber is in the range of 2 to 15%, and then the dried fiber is ground in module c).

9. The technological line according to claim 8, **characterized in that** the degumming of the fiber in the (a) degumming and modifying module R1-PW-R2-PW is carried out using chemical/biological agents dissolved in water, selected from ammonium citrate, ammonium oxalate, sodium carbonate, acids such as: oxalic acid, acetic acid and sulfuric acid, oxidizing agents such as: sodium chlorite, hydrogen peroxide and enzymes from the group of: hemicellulases, pectinases and phenol oxidases and other chemical substances, wherein the degumming and rinsing process is carried out at a temperature of 7 to 60°C for 15 minutes to 24 hours, wherein when the plant fiber is subjected to degumming and rinsing, water mixing is used.

10. The technological line according to claim 8, **characterized in that** in the (a) degumming and modifying module R1-PW-R2-PW the modification of the degummed fiber is carried out using silanes comprising various amounts of alkoxy and amine groups and silanes comprising double bonds or alkyl chains in their structures, wherein the silanes are selected from: tetraethoxysilane, 3-aminopropyltrimethoxysilane, 3-aminopropyltriethoxysilane, (N-(2-aminoethyl)3-aminopropyltriethoxysilane, N-(2-aminoethyl)-3-aminopropyl-trimethoxysilane, 3-[2-(2-aminoethylamino)ethylamino]propyltrimethoxysilane, vinyltrimethoxysilane, 3-methacryloxypropyltrimethoxysilane, n-octyltriethoxysilane, trimethoxy(octadecyl)silane.

11. The technological line according to claim 8, **characterized in that** the bast plant fiber is subjected to the degumming and rinsing processes.

12. The technological line according to claim 8, **characterized in that** in the (a) degumming and modifying module R1-PW-R2-PW the process of chemical modification with silane is carried out within 15 minutes to 24 hours, and the silane is used in an amount of 1-15% in a water/alcohol solution with a weight ratio of 1:0.02 - 1:2, wherein the chemical modification process with the use of silane is carried out in an amount of water/alcohol solution 5 to 10 times greater than the amount of fiber.

13. The technological line according to claim 8, **characterized in that** the fiber polarity change results in compatibility with the polymer matrix in the process of composites and biocomposites manufacturing, wherein the degree of silane solution application onto the fiber is 100-180%.
